(19) Europäisches Patentamt
European Patent Office
Office européen des brevets

(11) **EP 2 696 231 A1**

(12) **EUROPÄISCHE PATENTANMELDUNG**

(43) Veröffentlichungstag:
**12.02.2014 Patentblatt 2014/07**

(51) Int Cl.:
***G02B 15/177*** (2006.01)

(21) Anmeldenummer: 13179938.9

(22) Anmeldetag: **09.08.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **10.08.2012 DE 102012214303**
**10.08.2012 US 201261681768 P**

(71) Anmelder: **Carl Zeiss AG**
**73447 Oberkochen (DE)**

(72) Erfinder: **Dodoc, Aurelian**
**89522 Heidenheim (DE)**

(74) Vertreter: **Tongbhoyai, Martin**
**Patentanwälte Freischem**
**Salierring 47-53**
**50677 Köln (DE)**

(54) **Optisches system zur abbildung eines objekts**

(57) Die Erfindung betrifft ein optisches System (100) zur Abbildung eines Objekts (O) auf eine Bilderfassungseinheit (BE). Beispielsweise ist das optische System (100) als Objektiv ausgebildet. Das optische System (100) weist eine veränderbare Brennweite auf. Ferner weist das optische System (100) von einem Objekt (O) in Richtung einer Bilderfassungseinheit (BE) gesehen mindestens eine erste Linseneinheit (LE1), mindestens eine zweite Linseneinheit (LE2), mindestens eine dritte Linseneinheit (LE3) und mindestens eine vierte Linseneinheit (LE4) auf. Die erste Linseneinheit (LE1) weist mindestens eine Linsengruppe mit negativer Brechkraft auf. Die zweite Linseneinheit (LE2) weist mindestens eine Linsengruppe mit positiver Brechkraft auf und die dritte Linseneinheit (LE3) weist mindestens eine Linsengruppe mit negativer Brechkraft auf. Die zweite Linseneinheit (LE2) und die dritte Linseneinheit (LE3) weisen insgesamt mindestens drei Linsengruppen (LG21, LG31, LG32) auf, wobei von der ersten Linseneinheit (LE1) in Richtung einer Bilderfassungseinheit (BE) zunächst die erste Linsengruppe (LG21), dann die zweite Linsengruppe (LG31) und dann die dritte Linsengruppe (LG32) angeordnet sind. Die drei Linsengruppen (LG21, LG31, LG32) sind zur Veränderung der Brennweite des optischen Systems (100) beweglich ausgebildet.

Fig. 1

EP 2 696 231 A1

**Beschreibung**

Die Erfindung betrifft ein optisches System zur Abbildung eines Objekts auf eine Bilderfassungseinheit. Beispielsweise ist das optische System als Objektiv ausgebildet.

Aus dem Stand der Technik ist es bekannt, dass bei einer Abbildung eines Objekts mit großen Winkelfeldern (beispielsweise mit einem Winkelbereich von größer 70°) ein Weitwinkelobjektiv mit einer kleinen Brennweite (beispielsweise eine Brennweite von ca. 30 mm) verwendet wird. Dieses weist in der Regel eine erste Linseneinheit mit negativer Brechkraft und eine zweite Linseneinheit mit positiver Brechkraft auf. Für die Abbildung eines Objekts mit kleinen Winkelfeldern (beispielsweise mit einem Winkelbereich von kleiner 25°) wird in der Regel ein Teleobjektiv mit einer großen Brennweite (beispielsweise eine Brennweite von ca. 100 mm) verwendet.

Ferner sind aus dem Stand der Technik Zoomobjektive bekannt, die einen Brennweitenbereich aufweisen, der sich von einem Weitwinkelbereich in einen Telebereich erstreckt. Die Brennweite dieser Zoomobjektive ist einstellbar. Beispielsweise ist aus der US 5,847,875 ein Zoomlinsensystem bekannt. Das bekannte Zoomlinsensystem weist eine erste Linseneinheit bestehend aus einer Linsengruppe mit negativer Brechkraft, eine zweite Linseneinheit bestehend aus einer ersten Linsengruppe und einer zweiten Linsengruppe, wobei beide Linsengruppen positive Brechkraft aufweisen, eine dritte Linseneinheit bestehend aus einer Linsengruppe mit negativer Brechkraft und eine vierte Linseneinheit bestehend aus einer Linsengruppe mit positiver Brechkraft auf. Ferner ist eine Blende zwischen der zweiten Linseneinheit und der dritten Linseneinheit angeordnet. Sämtliche Linsengruppen innerhalb der vier vorgenannten Linseneinheiten sind für eine Veränderung der Brennweite längs einer optischen Achse verschiebbar. Die Position der ersten Linsengruppe der zweiten Linseneinheit ist zusätzlich für die Fokussierung einstellbar. Die Bildebene des Zoomlinsensystems ist während des Zoomvorganges nicht stabil. Aus diesem Grunde ist eine Nachfokussierung notwendig.

Aus der JP 08005921 A ist ebenfalls ein Zoomlinsensystem bekannt. Das aus dieser Druckschrift bekannte Zoomlinsensystem weist eine erste Linseneinheit bestehend aus einer Linsengruppe mit negativer Brechkraft, eine zweite Linseneinheit bestehend aus einer Linsengruppe mit positiver Brechkraft, eine dritte Linseneinheit bestehend aus einer Linsengruppe mit negativer Brechkraft, eine vierte Linseneinheit bestehend aus einer Linsengruppe mit positiver Brechkraft und eine fünfte Linseneinheit bestehend aus einer Linsengruppe mit positiver Brechkraft auf. Eine Blende ist zwischen der zweiten Linseneinheit und der dritten Linseneinheit angeordnet. Für die Veränderung der Brennweite des Zoomlinsensystems werden die Linsengruppen innerhalb der zweiten Linseneinheit, der dritten Linseneinheit und der vierten Linseneinheit bewegt. Hingegen weisen die erste Linseneinheit und die fünfte Linseneinheit während der Veränderung der Brennweite eine feste Stellung auf. Sie werden bei der Veränderung der Brennweite nicht bewegt.

Aus der US 3,682,534 ist ein Zoomobjektiv bekannt, welches aus mehreren Linseneinheiten besteht. Das bekannte Zoomobjektiv weist eine erste Linseneinheit bestehend aus einer ersten Linsengruppe mit negativer Brechkraft und aus einer zweiten Linsengruppe mit negativer Brechkraft, eine zweite Linseneinheit bestehend aus einer Linsengruppe mit positiver Brechkraft, eine dritte Linseneinheit bestehend aus einer Linsengruppe mit negativer Brechkraft, eine vierte Linseneinheit bestehend aus einer Linsengruppe mit positiver Brechkraft und eine fünfte Linseneinheit bestehend aus einer Linsengruppe mit positiver Brechkraft auf. Eine Blende ist zwischen der vierten Linseneinheit und der fünften Linseneinheit angeordnet. Für die Veränderung der Brennweite werden die Linsengruppen innerhalb der zweiten Linseneinheit, der dritten Linseneinheit und der vierten Linseneinheit derart entlang der optischen Achse des Zoomobjektivs verschoben, dass die Linsengruppe der zweiten Linseneinheit und die Linsengruppe der vierten Linseneinheit eine gemeinsame mechanisch gekoppelte Bewegung durchführen. Die erste Linseneinheit und die fünfte Linseneinheit sind während der Veränderung der Brennweite fest. Sie werden demnach bei der Veränderung der Brennweite nicht bewegt. Eine Fokussierung auf ein abzubildendes Objekt wird durch Bewegung der zweiten Linsengruppe der ersten Linseneinheit erzielt.

Der Erfindung liegt die Aufgabe zugrunde, ein optisches System (beispielsweise ein Objektiv für einen Weitwinkelbereich von größer als 70°) anzugeben, das einen verbesserten Aufbau und verbesserte Abbildungseigenschaften aufweist. Insbesondere soll bei der Erfindung die Bildebene stabilisiert werden.

Erfindungsgemäß wird diese Aufgabe mit einem optischen System mit den Merkmalen des Anspruchs 1 gelöst. Eine Aufnahmeeinheit mit einem derartigen optischen System ist durch die Merkmale des Anspruchs 15 gegeben. Weitere Merkmale der Erfindung ergeben sich aus der nachfolgenden Beschreibung, den nachfolgenden Ansprüchen und/oder aus den beigefügten Figuren.

Ein erfindungsgemäßes optisches System, insbesondere ein Objektiv, ist zur Abbildung eines Objekts auf eine Bilderfassungseinheit ausgebildet. Das optische System weist eine veränderbare Brennweite auf. Ferner weist das optische System von einem Objekt in Richtung einer Bilderfassungseinheit gesehen mindestens eine erste Linseneinheit, mindestens eine zweite Linseneinheit, mindestens eine dritte Linseneinheit und mindestens eine vierte Linseneinheit auf. Somit weist das erfindungsgemäße optische System von einem Objekt in Richtung einer Bilderfassungseinheit gesehen folgende Reihenfolge von Einheiten auf: erste Linseneinheit - zweite Linseneinheit - dritte Linseneinheit - vierte Linseneinheit. Bei einem Ausführungsbeispiel der Erfindung weist das optische System genau nur die vorgenannten Linseneinheiten auf. Bei einer alternativen Ausführungsform ist es vorgesehen, dass das erfindungsgemäße optische System mehr als die vorgenannten Linseneinheiten aufweist.

Dabei wird vorstehend und auch nachstehend unter einer Linseneinheit eine Einheit mit einer einzelnen Linsengruppe oder mit mehreren Linsengruppen verstanden, wobei jede Linsengruppe aus einer einzelnen Linse oder aus mehreren Linsen bestehen kann. Die Linsen können unterschiedliche Brechkräfte aufweisen. Die Linsengruppen der vorgenannten Linseneinheiten können unterschiedliche Funktionen aufweisen. Wie nachfolgend noch näher erläutert wird, sind einige Linsengruppen zur Veränderung der Brennweite des optischen Systems beweglich ausgebildet. Wiederum andere Linsengruppen sind zur Fokussierung auf ein abzubildendes Objekt beweglich ausgebildet.

Bei dem erfindungsgemäßen optischen System ist es nun vorgesehen, dass die zweite Linseneinheit und die dritte Linseneinheit insgesamt mindestens drei Linsengruppen aufweisen, nämlich eine erste Linsengruppe, eine zweite Linsengruppe und eine dritte Linsengruppe, wobei von der ersten Linseneinheit in Richtung einer Bilderfassungseinheit zunächst die erste Linsengruppe, dann die zweite Linsengruppe und dann die dritte Linsengruppe angeordnet sind. Somit weist das erfindungsgemäße optische System von der ersten Linseneinheit in Richtung einer Bilderfassungseinheit gesehen folgende Reihenfolge von Gruppen auf: erste Linsengruppe - zweite Linsengruppe- dritte Linsengruppe. Beispielsweise ist es vorgesehen, dass exakt nur drei Linsengruppen bei der zweiten Linseneinheit und der dritten Linseneinheit insgesamt vorhanden sind. Ferner ist es bei dem erfindungsgemäßen optischen System vorgesehen, dass die vorgenannten drei Linsengruppen zur Veränderung der Brennweite des optischen Systems beweglich ausgebildet sind. Mindestens eine Linsengruppe aus der Menge der ersten Linsengruppe, der zweiten Linsengruppe und der dritten Linsengruppe weist positive Brechkraft. Darüber hinaus weist mindestens eine Linsengruppe aus der Menge der ersten Linsengruppe, der zweiten Linsengruppe und der dritten Linsengruppe negative Brechkraft auf. Dabei ist es für den Fachmann klar, dass eine einzelne Linsengruppe entweder nur positive Brechkraft oder nur negative Brechkraft aufweist.

Bei dem erfindungsgemäßen optischen System werden während eines Zoomvorgangs (also während eines Vorgangs zur Veränderung der Brennweite) die erste Linsengruppe, die zweite Linsengruppe und die dritte Linsengruppe der zweiten Linseneinheit und der dritten Linseneinheit entlang der optischen Achse des optischen Systems bewegt. Hingegen werden die erste Linseneinheit und die vierte Linseneinheit während des Zoomvorgangs nicht bewegt. Diese sind während des Zoomvorgangs fest auf der optischen Achse angeordnet.

Aus dem Stand der Technik ist es bekannt, dass eine Linsengruppe innerhalb einer zweiten Linseneinheit für die Variation einer Brennweite eines optischen Systems bewegt wird. Für eine Kompensation der Lage der Bildebene wird eine Linsengruppe innerhalb einer dritten Linseneinheit bewegt. Während des Zoomvorganges bleibt die Bildebene in einer festen Lage. Die Aberrationen des Bildes verändern sich aber mit der Brennweite. Für die Variation der Abberationen ist es nun vorteilhaft, wenn eine weitere Linsengruppe innerhalb der zweiten Linseneinheit bzw. der dritten Linseneinheit während des Zoomvorganges bewegt wird, wie nun bei der Erfindung vorgesehen.

Bei dem erfindungsgemäßen optischen System ist es zusätzlich oder alternativ vorgesehen, dass die zweite Linseneinheit mindestens eine Linsengruppe mit positiver Brechkraft aufweist (beispielsweise die erste Linsengruppe, die zweite Linsengruppe und/oder die dritte Linsengruppe) und/oder dass die zweite Linseneinheit mindestens eine Linsengruppe mit negativer Brechkraft aufweist (beispielsweise die erste Linsengruppe, die zweite Linsengruppe und/ oder die dritte Linsengruppe).

Bei einer weiteren Ausführungsform des erfindungsgemäßen optischen Systems ist es zusätzlich oder alternativ hierzu vorgesehen, dass die zweite Linseneinheit die erste Linsengruppe und die zweite Linsengruppe aufweist, und dass die dritte Linseneinheit die dritte Linsengruppe aufweist. Alternativ hierzu ist es bei einem weiteren Ausführungsbeispiel der Erfindung vorgesehen, dass die zweite Linseneinheit die erste Linsengruppe aufweist und dass die dritte Linseneinheit die zweite Linsengruppe und die dritte Linsengruppe aufweist.

Bei einer Ausführungsform des erfindungsgemäßen optischen Systems ist es zusätzlich oder alternativ hierzu vorgesehen, dass die erste Linseneinheit des optischen Systems bzw. eine Linsengruppe der ersten Linseneinheit negative Brechkraft aufweist. Bei einer weiteren Ausführungsform des erfindungsgemäßen optischen Systems ist es zusätzlich oder alternativ vorgesehen, dass die vierte Linseneinheit des optischen Systems bzw. eine Linsengruppe der vierten Linseneinheit negative oder positive Brechkraft aufweist.

Bei einer Ausführungsform des erfindungsgemäßen optischen Systems ist es zusätzlich oder alternativ hierzu vorgesehen, dass die zweite Linseneinheit einen Abbildungsmaßstab aufweist, der während der Veränderung der Brennweite zwischen -0,4 und -2 veränderbar ist. Bei einer wiederum weiteren Ausführungsform des erfindungsgemäßen optischen Systems ist es zusätzlich oder alternativ hierzu vorgesehen, dass die dritte Linseneinheit einen positiven Abbildungsmaßstab aufweist, der während der Veränderung der Brennweite zwischen 1,5 und 3 veränderbar ist.

Bei einer Ausführungsform des erfindungsgemäßen optischen Systems ist es zusätzlich oder alternativ hierzu vorgesehen, dass die zweite Linseneinheit die erste Linsengruppe und die zweite Linsengruppe aufweist, und dass die erste Linsengruppe und die zweite Linsengruppe positive Brechkraft aufweisen. Bei einer wiederum weiteren Ausführungsform des erfindungsgemäßen optischen Systems ist es alternativ hierzu vorgesehen, dass die erste Linsengruppe der zweiten Linseneinheit positive Brechkraft oder die zweite Linsengruppe der zweiten Linseneinheit positive Brechkraft aufweist. Insbesondere ist bei einem weiteren Ausführungsbeispiel des erfindungsgemäßen Systems zusätzlich oder alternativ vorgesehen, dass die erste Linsengruppe der zweiten Linseneinheit aus einer einzelnen Linse gebildet ist.

Bei einer weiteren Ausführungsform des erfindungsgemäßen optischen Systems ist es zusätzlich oder alternativ hierzu vorgesehen, dass die dritte Linseneinheit die dritte Linsengruppe aufweist. Es wird aber explizit darauf hingewiesen, dass bei einem Ausführungsbeispiel die zweite Linseneinheit eine Linsengruppe aus der Menge der ersten Linsengruppe, der zweiten Linsengruppe und der dritten Linsengruppe aufweist (beispielsweise die erste Linsengruppe) und dass die dritte Linseneinheit zwei Linsengruppen aus der Menge der ersten Linsengruppe, der zweiten Linsengruppe und der dritten Linsengruppe aufweist (beispielsweise die zweite Linsengruppe und die dritte Linsengruppe).

Bei einer Ausführungsform des erfindungsgemäßen optischen Systems ist es zusätzlich oder alternativ vorgesehen, dass die erste Linsengruppe einen Abbildungsmaßstab aufweist und dass die zweite Linsengruppe einen Abbildungsmaßstab aufweist. Der Abbildungsmaßstab der ersten Linsengruppe und der Abbildungsmaßstab der zweiten Linsengruppe wechseln während der Veränderung der Brennweite zum gleichen Zeitpunkt das Vorzeichen.

Bei einer Ausführungsform des erfindungsgemäßen optischen Systems ist es zusätzlich oder alternativ hierzu vorgesehen, dass die erste Linseneinheit mindestens zwei Linsengruppen umfasst. Von einem Objekt in Richtung einer Bilderfassungseinheit gesehen sind zunächst die vierte Linsengruppe und dann die fünfte Linsengruppe angeordnet. Sowohl die vierte Linsengruppe als auch die fünfte Linsengruppe weisen negative Brechkraft auf.

Für die Einstellung einer Brennweite des optischen Systems werden weder die vierte Linsengruppe noch die fünfte Linsengruppe bewegt. Hingegen wird die fünfte Linsengruppe für eine Fokussierung des optischen Systems bewegt. Somit ist zu einer Fokussierung des optischen Systems die fünfte Linsengruppe beweglich ausgebildet.

Bei einer weiteren Ausführungsform des erfindungsgemäßen optischen Systems ist es zusätzlich oder alternativ hierzu vorgesehen, dass die erste Linsengruppe und die zweite Linsengruppe jeweils einen Abbildungsmaßstab aufweisen, der bei einer Veränderung der Brennweite des optischen Systems das Vorzeichen wechselt, so dass der Abbildungsmaßstab der ersten Linseneinheit dasselbe Vorzeichen behält.

Bei einer Ausführungsform des erfindungsgemäßen optischen Systems ist es zusätzlich oder alternativ hierzu vorgesehen, dass sowohl der Betrag des Abbildungsmaßstabs der zweiten Linseneinheit und als auch der Betrag des Abbildungsmaßstabs der dritten Linseneinheit bei einer Veränderung der Brennweite des optischen Systems von der ersten Brennweiteneinstellung in die zweite Brennweiteneinstellung stetig ansteigt.

Bei einer weiteren Ausführungsform des erfindungsgemäßen optischen Systems ist es zusätzlich oder alternativ hierzu vorgesehen, dass das Produkt des Abbildungsmaßstabs der zweiten Linseneinheit und des Abbildungsmaßstabs der dritten Linseneinheit betragsmäßig im Bereich von 0,9 bis 5,0 liegt.

Bei einer wiederum weiteren Ausführungsform des erfindungsgemäßen optischen Systems ist es zusätzlich oder alternativ hierzu vorgesehen, dass die zweite Linseneinheit einen (zweiten) Abbildungsmaßstab $\beta_2$ aufweist. Ferner weist die dritte Linseneinheit einen (dritten) Abbildungsmaßstab $\beta_3$ auf. Bei dem erfindungsgemäßen optischen System ist es nun vorgesehen, dass sowohl der Betrag des (zweiten) Abbildungsmaßstabs $\beta_2$ als auch der Betrag des (dritten) Abbildungsmaßstabs $\beta_3$ in einer ersten Brennweiteneinstellung der zweiten Linseneinheit und der dritten Linseneinheit, die zum Erzielen einer ersten Brennweite des optischen Systems einstellbar ist, kleiner als der Betrag des (zweiten) Abbildungsmaßstabs $\beta_2$ und der Betrag des (dritten) Abbildungsmaßstabs $\beta_3$ in einer zweiten Brennweiteneinstellung der zweiten Linseneinheit und der dritten Linseneinheit sind, die zum Erzielen einer zweiten Brennweite des optischen Systems einstellbar ist. Mit anderen Worten ausgedrückt sind die Beträge des Abbildungsmaßstabs der zweiten Linseneinheit und des Abbildungsmaßstabs der dritten Linseneinheit in der ersten Brennweiteneinstellung kleiner als in der zweiten Brennweiteneinstellung. Die erste Brennweiteneinstellung ist beispielsweise eine Weitwinkeleinstellung des optischen Systems. Hingegen ist die zweite Brennweiteneinstellung beispielsweise eine Teleeinstellung des optischen Systems.

Es ist für die Variation der Abberationen vorteilhaft, wenn sowohl die zweite Linseneinheit als auch die dritte Linseneinheit einen aktiven Beitrag zur Variation der Brennweite leisten. Dies wird dadurch sichergestellt, dass die Beträge des Abbildungsmaßstabs der zweiten Linseneinheit und des Abbildungsmaßstabs der dritten Linseneinheit in der ersten Brennweiteneinstellung kleiner als in der zweiten Brennweiteneinstellung sind.

Wie bereits oben erwähnt, ist es bei einer Ausführungsform des erfindungsgemäßen optischen Systems alternativ oder zusätzlich vorgesehen, dass sowohl der Betrag des (zweiten) Abbildungsmaßstabs $\beta_2$ der zweiten Linseneinheit als auch der Betrag des (dritten) Abbildungsmaßstabs $\beta_3$ der dritten Linseneinheit bei einer Veränderung der Brennweite des optischen Systems von der ersten Brennweiteneinstellung in die zweite Brennweiteneinstellung stetig ansteigt. Beispielsweise ist es vorgesehen, dass das optische System das folgende Merkmal aufweist: ein Produkt des (zweiten) Abbildungsmaßstabs $\beta_2$ und des (dritten) Abbildungsmaßstabs $\beta_3$ liegt betragsmäßig im Bereich von 1,41 bis 4,21. Die vorgenannten Bereichsgrenzen gehören zu dem beanspruchten Bereich. Es wird aber explizit darauf hingewiesen, dass die Erfindung nicht auf den vorgenannten Bereich eingeschränkt ist. Vielmehr ist jeder Bereich verwendbar, der für die Erfindung geeignet ist.

Bei einem weiteren Ausführungsbeispiel des erfindungsgemäßen optischen Systems ist es zusätzlich vorgesehen, dass das optische System die folgende Bedingung erfüllt:

$$|\beta_{2W}\,\beta_{3W}| < |\beta_{2M}\,\beta_{3M}| < |\beta_{2T}\,\beta_{3T}| \quad \text{[Relation 1]}$$

wobei

$\beta_{2W}$ der Abbildungsmaßstab der zweiten Linseneinheit in der ersten Brennweiteneinstellung ist,

$\beta_{3W}$ der Abbildungsmaßstab der dritten Linseneinheit in der ersten Brennweiteneinstellung ist,

$\beta_{2M}$ der Abbildungsmaßstab der zweiten Linseneinheit in der zweiten Brennweiteneinstellung ist,

$\beta_{3M}$ der Abbildungsmaßstab der dritten Linseneinheit in der zweiten Brennweiteneinstellung ist,

$\beta_{2T}$ der Abbildungsmaßstab der zweiten Linseneinheit in einer dritten Brennweiteneinstellung ist, und

$\beta_{3T}$ der Abbildungsmaßstab der dritten Linseneinheit in der dritten Brennweiteneinstellung ist.

Beispielsweise ändert sich das Produkt des (zweiten) Abbildungsmaßstabs $\beta_2$ und des (dritten) Abbildungsmaßstabs $\beta_3$ in einem Bereich von 0,98 bis 2,64 stetig, wobei die angegeben Bereichsgrenzen zum Bereich gehören. Es wird aber explizit darauf hingewiesen, dass die Erfindung nicht auf den vorgenannten Bereich eingeschränkt ist. Vielmehr ist jeder Bereich verwendbar, der für die Erfindung geeignet ist.

Bei einer weiteren Ausführungsform des erfindungsgemäßen optischen Systems ist es zusätzlich oder alternativ vorgesehen, dass zwischen der zweiten Linseneinheit und der dritten Linseneinheit eine Blende angeordnet ist. Ferner ist es  beispielsweise vorgesehen, die Blende innerhalb der dritten Linseneinheit anzuordnen. Bei einer Veränderung der Brennweite des optischen Systems wird die Blende zusammen mit der dritten Linseneinheit oder innerhalb der dritten Linseneinheit bewegt. Die Blende bewegt sich also gleichzeitig mit der dritten Linseneinheit. Mit anderen Worten ausgedrückt ist für eine Veränderung der Brennweite des optischen Systems die Blende zusammen mit der dritten Linseneinheit beweglich ausgebildet. Ferner ist es beispielsweise vorgesehen, dass die Blende eine Blendenöffnung aufweist. Die Blendenöffnung der Blende ist bei einer Veränderung der Brennweite des optischen Systems einstellbar. Insbesondere ist es vorgesehen, dass eine Ausdehnung der Blendenöffnung im Bereich von 20 mm bis 35 mm liegt.

Bei einem wiederum weiteren Ausführungsbeispiel des erfindungsgemäßen optischen Systems ist es zusätzlich oder alternativ vorgesehen, dass eine Linse in der ersten Linseneinheit bzw. eine Linse der ersten Linseneinheit mindestens eine erste asphärische Fläche aufweist. Zusätzlich oder alternativ hierzu ist es vorgesehen, dass eine Linse in der zweiten Linseneinheit bzw. eine Linse der zweiten Linseneinheit mindestens eine zweite asphärische Fläche aufweist. Wiederum zusätzlich oder alternativ hierzu ist es vorgesehen, dass die dritte Linseneinheit mindestens eine dritte asphärische Fläche aufweist. Beispiele für die Ausbildung der ersten asphärischen Fläche, der zweiten asphärischen Fläche und der dritten asphärischen Fläche sind weiter unten angegeben.

Bei einem wiederum weiteren Ausführungsbeispiel des erfindungsgemäßen optischen Systems ist es alternativ oder zusätzlich vorgesehen, dass

-    die positive Brechkraft innerhalb der zweiten Linseneinheit bzw. in der zweiten Linseneinheit sich auf eine Brennweite bezieht, die im Bereich zwischen 40 mm und 70 mm liegt, und/oder dass

-    die negative Brechkraft innerhalb der dritten Linseneinheit bzw. in der dritten Linseneinheit sich auf eine Brennweite bezieht, die im Bereich zwischen -40 mm und -120 mm liegt.

Bei einem weiteren Ausführungsbeispiel des erfindungsgemäßen optischen Systems ist es zusätzlich oder alternativ vorgesehen, dass die erste Linseneinheit mindestens eine Linse mit positiver Brechkraft aufweist. Diese kann beispielsweise als einzelne Linse oder als ein Kittglied bestehend aus einer Linse mit positiver Brechkraft und einer Linse mit negativer Brechkraft ausgebildet sein.

Wie bereits oben erwähnt, ist das optische System beispielsweise als Objektiv ausgebildet. Die Erfindung betrifft auch eine Aufnahmeeinheit zur Abbildung eines Objekts mit mindestens einem optischen System sowie mit mindestens einer Bilderfassungseinheit. Das optische System weist eines der oben genannten oder noch weiter unten genannten Merkmale auf. Ferner kann das optische System eine Kombination von mindestens zwei der oben genannten oder unten genannten Merkmale aufweisen.

Nachfolgend wird die Erfindung anhand von Ausführungsbeispielen mittels Figuren näher erläutert. Dabei zeigen

Figur 1    eine erste Schnittdarstellung eines ersten Ausführungsbeispiels eines Objektivs in einer ersten Brennweiteneinstellung;

Figur 2    eine zweite Schnittdarstellung des Objektivs nach Figur 1 in einer zweiten Brennweiteneinstellung;

Figur 3    eine dritte Schnittdarstellung des Objektivs nach Figur 1 in einer dritten Brennweiteneinstellung;

Figur 4    eine erste Schnittdarstellung eines zweiten Ausführungsbeispiels eines Objektivs in einer ersten Brennweiteneinstellung;

Figur 5    eine zweite Schnittdarstellung des Objektivs nach Figur 4 in einer zweiten Brennweiteneinstellung; und

Figur 6    eine dritte Schnittdarstellung des Objektivs nach Figur 4 in einer dritten Brennweiteneinstellung.

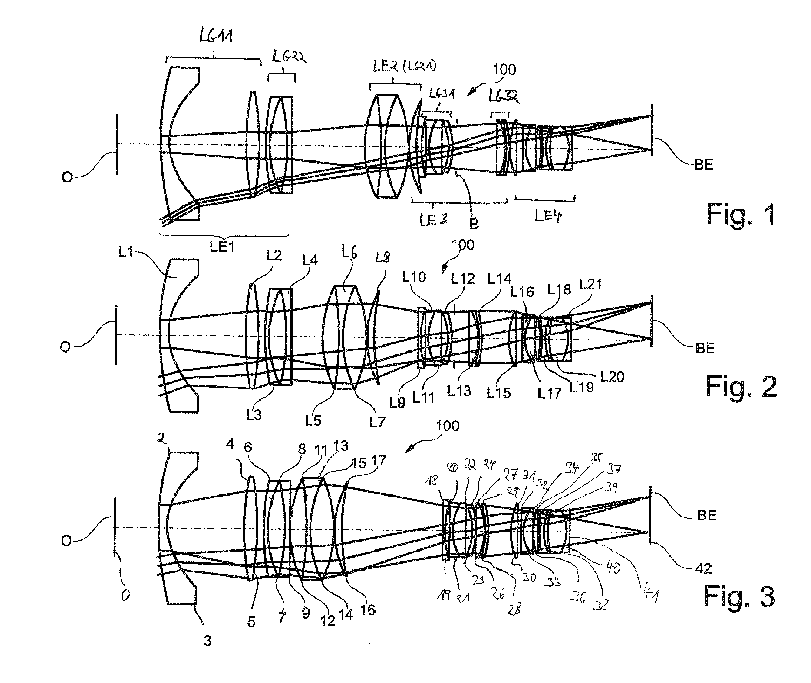

Die Figuren 1 bis 3 zeigen Schnittdarstellungen eines optischen Systems in Form eines Objektivs 100. Figur 1 ist eine Schnittdarstellung des Objektivs 100 in einer ersten Brennweiteneinstellung, nämlich einer Weitwinkelstellung. Figur 3 ist eine Schnittdarstellung des Objektivs 100 in einer dritten Brennweiteneinstellung, nämlich einer Teleeinstellung. Figur 2 zeigt eine Schnittdarstellung des Objektivs 100 in einer zweiten (mittleren) Brennweiteneinstellung, welche zwischen der ersten Brennweiteneinstellung und der dritten Brennweiteneinstellung liegt.

Das Objektiv 100 dient der Abbildung eines Objekts O (nur schematisch dargestellt) auf eine Bilderfassungseinheit BE oder an eine Bildebene. Es weist eine erste Linseneinheit LE1, eine zweite Linseneinheit LE2, eine dritte Linseneinheit LE3 sowie eine vierte Linseneinheit LE4 auf. Die vorgenannten Linseneinheiten LE1 bis LE4 sind vom Objekt O in Richtung der Bilderfassungseinheit BE in der folgenden Reihenfolge im Objektiv 100 angeordnet: erste Linseneinheit LE1 - zweite Linseneinheit LE2 - dritte Linseneinheit LE3 - vierte Linseneinheit LE4. Hinsichtlich der Definition des Begriffs Linseneinheit wird auf weiter oben verwiesen.

Die erste Linseneinheit LE1 weist eine erste Linse L1, eine zweite Linse L2, eine dritte Linse L3 und eine vierte Linse L4 auf. Die erste Linse L1 und die zweite Linse L2 bilden eine vierte Linsengruppe LG11, welche negative Brechkraft aufweist. Ferner bilden die dritte Linse L3 und die vierte Linse L4 eine fünfte Linsengruppe LG22, welche ebenfalls negative Brechkraft aufweist.

Die zweite Linseneinheit LE2 ist ebenfalls aus mehreren Linsen zusammengesetzt, nämlich aus einer fünften Linse L5, einer sechsten Linse L6, einer siebten Linse L7 und einer achten Linse L8. Die vorgenannten Linsen L5 bis L8 bilden die erste Linsengruppe LG21, die positive Brechkraft aufweist.

Die dritte Linseneinheit LE3 umfasst eine neunte Linse L9, eine zehnte Linse L10, eine elfte Linse L11, eine zwölfte Linse L12, eine dreizehnte Linse L13 und eine  vierzehnte Linse L14. Die vorgenannten Linsen L9 bis L14 sind in zwei Linsengruppen aufgeteilt. Mit anderen Worten ausgedrückt besteht die dritte Linseneinheit LE3 aus zwei Linsengruppen, nämlich einer zweiten Linsengruppe LG31 und einer dritten Linsengruppe LG32. Die neunte Linse L9, die zehnte Linse L10, die elfte Linse L11 und die zwölfte Linse L12 bilden die zweite Linsengruppe LG31, die negative Brechkraft aufweist. Hingegen bilden die dreizehnte Linse L13 und die vierzehnte L14 die dritte Linsengruppe LG32, die positive Brechkraft aufweist.

Die vierte Linseneinheit LE4 weist ebenfalls mehrere Linsen auf, nämlich eine fünfzehnte Linse L15, eine sechzehnte Linse L16, eine siebzehnte Linse L17, eine achtzehnte Linse L18, eine neunzehnte Linse L19, eine zwanzigste Linse L20 und eine einundzwanzigste Linse L21. Die vorgenannten Linsen L15 bis L21 sind fest an der optischen Achse des Objektivs 100 angeordnet. Sie sind demnach unbeweglich ausgebildet. Die vierte Linseneinheit LE4 weist ferner positive Brechkraft auf.

Jede der vorgenannten Linsen L1 bis L21 weist eine zum Objekt O gerichtete erste Fläche und eine zur Bilderfassungseinheit BE gerichtete zweite Fläche auf. Diese sind in der Figur 3 gekennzeichnet.

So weist die erste Linse L1 eine zum Objekt O gerichtete Fläche 2 und eine zur Bilderfassungseinheit BE gerichtete Fläche 3 auf. Die zweite Linse L2 ist mit einer zum Objekt O gerichteten Fläche 4 und mit einer zur Bilderfassungseinheit BE gerichteten Fläche 5 versehen. Die dritte Linse L3 weist eine zum Objekt O gerichtete Fläche 6 und eine zur Bilderfassungseinheit BE gerichtete Fläche 7 auf. Die vierte Linse L4 hingegen ist mit einer zum Objekt O gerichteten Fläche 8 und mit einer zur Bilderfassungseinheit BE gerichteten Fläche 9 versehen. Die fünfte Linse L5 weist eine zum Objekt O gerichtete Fläche 11 und eine zur Bilderfassungseinheit BE gerichtete Fläche 12 auf. Die sechste Linse L6 weist ebenfalls die zum Objekt O gerichtete Fläche 12 und eine zur Bilderfassungseinheit BE gerichtete Fläche 13 auf. Die siebte Linse L7 weist eine zum Objekt O gerichtete Fläche 14 und eine zur Bilderfassungseinheit BE gerichtete Fläche 15 auf. Hingegen weist die achte Linse L8 eine zum Objekt O gerichtete Fläche 16 und eine zur Bilderfassungseinheit BE gerichtete Fläche 17 auf.

Die neunte Linse L9 weist eine zum Objekt O gerichtete Fläche 18 und eine zur Bilderfassungseinheit BE gerichtete Fläche 19 auf. Die zehnte Linse L10 hingegen weist eine zum Objekt O gerichtete Fläche 20 und eine zur Bilderfassungseinheit BE gerichtete Fläche 21 auf. Die elfte Linse L11 weist wiederum die zum Objekt O gerichtete Fläche 21 und eine zur Bilderfassungseinheit BE gerichtete Fläche 22 auf. Die zwölfte Linse L12 weist eine zum Objekt O gerichtete Fläche 23 auf und ist ferner mit einer zur Bilderfassungseinheit BE gerichteten Fläche 24 versehen.

Die dreizehnte Linse L13 weist eine zum Objekt O gerichtete Fläche 26 und eine zur Bilderfassungseinheit BE gerichtete Fläche 27 auf. Die vierzehnte Linse L14 wiederum weist eine zum Objekt O gerichtete Fläche 28 und eine zur Bilderfassungseinheit BE gerichtete Fläche 29 auf.

Die fünfzehnte Linse L15 weist nun eine zum Objekt O gerichtete Fläche 30 und eine zur Bilderfassungseinheit BE gerichtete Fläche 31 auf. Die sechzehnte Linse L16 ist mit einer zum Objekt O gerichteten Fläche 32 und mit einer zur Bilderfassungseinheit BE gerichteten Fläche 33 versehen. Die siebzehnte Linse L17 weist ebenfalls die Fläche 33 auf (als zum Objekt O gerichtete Fläche). Ferner weist die siebzehnte Linse L17 eine zur Bilderfassungseinheit BE gerichtete Fläche 34 auf.

Die achtzehnte Linse L18 ist mit einer zum Objekt O gerichteten Fläche 35 und mit einer zur Bilderfassungseinheit BE gerichteten Fläche 36 versehen. Die neunzehnte Linse L19 weist eine zum Objekt O gerichtete Fläche 37 auf. Ferner weist die neunzehnte Linse L19 eine zur Bilderfassungseinheit BE gerichtete Fläche 38 auf. Die zwanzigste Linse L20 ist mit einer zum Objekt O gerichteten Fläche 39 und mit einer zur Bilderfassungseinheit BE gerichteten Fläche 40 versehen. Ferner ist die einundzwanzigste Linse L21 mit der (nun zum Objekt O gerichteten) Fläche 40 und mit einer zur Bilderfassungseinheit BE gerichteten Fläche 41 versehen.

Nachfolgend werden in einer Tabelle Eigenschaften der einzelnen Linsenflächen angegeben.

**Tabelle 1:**

| Fläche | Radius [mm] | Dicke [mm] | Glas |
|---|---|---|---|
| 0 | Unendlich | 0,000000 | |
| 1 | Unendlich | 1,000000 | |
| 2 | 179,440927 | 5,000000 | SLAL14 |
| 3 (A) | 42,793891 | 45,265549 | |
| 4 | 165,537518 | 7,849603 | STIH1 |
| 5 | -178,955980 | 3,811496 | |
| 6 | 141,474076 | 2,197848 | SBSM81 |
| 7 (A) | 56,630789 | 11,108192 | |
| 8 | -118,888181 | 2,002500 | SPHM52 |
| 9 | 2717,871636 | 0,098411 | |
| 10 | 112,626934 | 45,090755 | |
| 11 | 87,991467 | 9,120389 | NPK51 |
| 12 | -240,739590 | 2,621041 | SNBH55 |
| 13 | 82,226285 | 0,094764 | |
| 14 (A) | 63,823508 | 14,387301 | SFPM2 |
| 15 | -80,756780 | 0,109966 | |
| 16 | 72,855277 | 4,550673 | SBSM81 |
| 17 | 157,489217 | 0,786296 | |
| 18 | 258,306392 | 1,997536 | NPK51 |
| 19 | 68,039292 | 3,147796 | |
| 20 | -227,644895 | 2,039384 | SLAL18 |
| 21 | 31,513851 | 7,129721 | SNBH53 |
| 22 | 383,678104 | 4,363849 | |
| 23 | -34,485216 | 2,128739 | NKZFS11 |
| 24 | -56,569919 | 0,098778 | |
| 25 | Blende | 26,651291 | |
| 26 | 614,963341 | 5,300596 | SFPL53 |
| 27 | -42,422656 | 0,095794 | |

(fortgesetzt)

| Fläche | Radius [mm] | Dicke [mm] | Glas |
|---|---|---|---|
| 28 | -94,791888 | 1,997986 | SNSL36 |
| 29 | -110,928045 | 0,093590 | |
| 30 | 33,389624 | 4,678853 | SFPL51 |
| 31 | 199,000685 | 3,812433 | |
| 32 | 141,075501 | 1,997055 | NKZFS11 |
| 33 | 23,776940 | 5,387905 | NPK51 |
| 34 | 251,054608 | 0,091703 | |
| 35 | 48,976132 | 3,063885 | OSTIH11 |
| 36 | 348,376035 | 1,375109 | |
| 37 | -109,261627 | 2,658027 | SYGH51 |
| 38 | 31,970394 | 1,739882 | |
| 39 | 73,530882 | 11,462996 | OSLAL14 |
| 40 | -31,340921 | 1,998918 | STIH1 |
| 41 | -1715,506607 | 49,176950 | |
| 42 | Unendlich | | |

Aus der vorstehenden Tabelle gehen die einzelnen Flächen der einzelnen Linsen L1 bis L21 hervor. Ferner sind die Radien der einzelnen Flächen angegeben. Darüber hinaus ist der Abstand des Scheitelpunkts einer Fläche zu dem Scheitelpunkt der nächsten Fläche angegeben. Dies gibt auch die Dicke der einzelnen Linsen L1 bis L21 wieder. Ferner ist die Glassorte der jeweiligen Linsen angegeben, wobei die Notation der Glassorten sich auf Glassorten der Unternehmen Schott und Ohara bezieht.

Die Flächen 1 und 10 sind in den Figuren 1 bis 3 nicht dargestellt. Es handelt sich um Hilfsflächen, die zur Berechnung der vorgenannten Daten verwendet wurden. Die Flächen 1 und 10 sind körperlich nicht im Objektiv 100 realisiert.

Mit der Fläche 25 ist eine Blende B bezeichnet (vgl. **Figur 1).** Diese ist innerhalb der dritten Linseneinheit LE3, nämlich zwischen der zweiten Linsengruppe LG31 und der dritten Linsengruppe LG32, angeordnet. Die Blende B ist mit der ersten Linsengruppe LG31 mechanisch fest verbunden, wie weiter unten noch näher ausgeführt wird. Es ist bei den erfindungsgemäßen Objektiven von Vorteil, dass die Blende B mit einer beweglichen negativen Linsengruppe mechanisch gekoppelt ist. Diese Kopplung wirkt sich vorteilhaft auf die Durchmesser der einzelnen Einheiten aus und führt somit zu kleinen Durchmessern der einzelnen Einheiten.

Mit der Fläche 0 ist in der Tabelle das Objekt O bezeichnet. Die Fläche 42 bezeichnet die Fläche der Bilderfassungseinheit BE.

Flächen einzelner Linsen sind asphärisch ausgebildet. Diese Flächen sind mit einem "A" gekennzeichnet, wobei sich die asphärische Ausbildung nach der folgenden Gleichung mit den dazugehörigen Asphärenkoeffizienten ergibt:

$$z = \frac{ch^2}{1 + SQRT\{1 - (1+k)c^2h^2\}} + A_4h^4 + A_6h^6 + A_8h^8 + A_{10}h^{10} + A_{12}h^{12} + A_{14}h^{14} + A_{16}h^{16} + A_{18}h^{18} + A_{20}h^{20} + A_{22}h^{22}$$

wobei z der Pfeilhöhe der Fläche einer Linse parallel zur z-Achse, c der Krümmung der Fläche im Scheitel der Linse, k der konischen Konstanten sowie $A_4$ bis $A_{22}$ den asphärischen Koeffizienten der 4ten, 6ten, 8ten, 10ten, 12ten, 14ten, 16ten, 18ten, 20ten und 22ten Ordnung entsprechen.

Für die Fläche 3 gelten die folgenden Koeffizienten:

k = 0,000000
$A_4$ = -3,47216999554806E-07

$A_6$ = 1.62281323450359E-10
$A_8$ = -1.10227868827696E-12
$A_{10}$ = 9.47999979625852E-16
$A_{12}$ = -4.11693166339820E-19

Für die Fläche 7 gelten die folgenden Koeffizienten:

k = 0,000000
$A_4$ = -8.86986401525628E-07
$A_6$ = 7.67654111159220E-11
$A_8$ = -8.00620389675939E-13
$A_{10}$ = 8.94019839262487E-16
$A_{12}$ = -4.10451702903618E-19

Für die Fläche 14 gelten die folgenden Koeffizienten:

k = 0,000000
$A_4$ = -1.16094991801851E-06
$A_6$ = 2.26222305831368E-10
$A_8$ = -4.22710608286331 E-13
$A_{10}$ = 3.84564751821469E-16
$A_{12}$ = -9.37909957903892E-19

In der nachfolgenden Tabelle 2 sind die Brennweiten, die F-Zahl sowie der Abstand der angegebenen Flächen zur nächsten Fläche der in den Figuren 1 bis 3 dargestellten Brennweiteneinstellungen angegeben.

**Tabelle 2:**

| **Zoom** | **f** | **F-Zahl** | **Abstand 10 [mm]** | **Abstand 17 [mm]** | **Abstand 25 [mm]** | **Abstand 29 [mm]** |
|---|---|---|---|---|---|---|
| Fig. 1 | 28,500 | 2,80 | 45,091 | 0,786 | 26,651 | 0,094 |
| Fig. 2 | 50,000 | 2,80 | 20,534 | 24,747 | 11,120 | 16,221 |
| Fig. 3 | 83,996 | 2,80 | 0,094 | 65,976 | 0,788 | 5,763 |

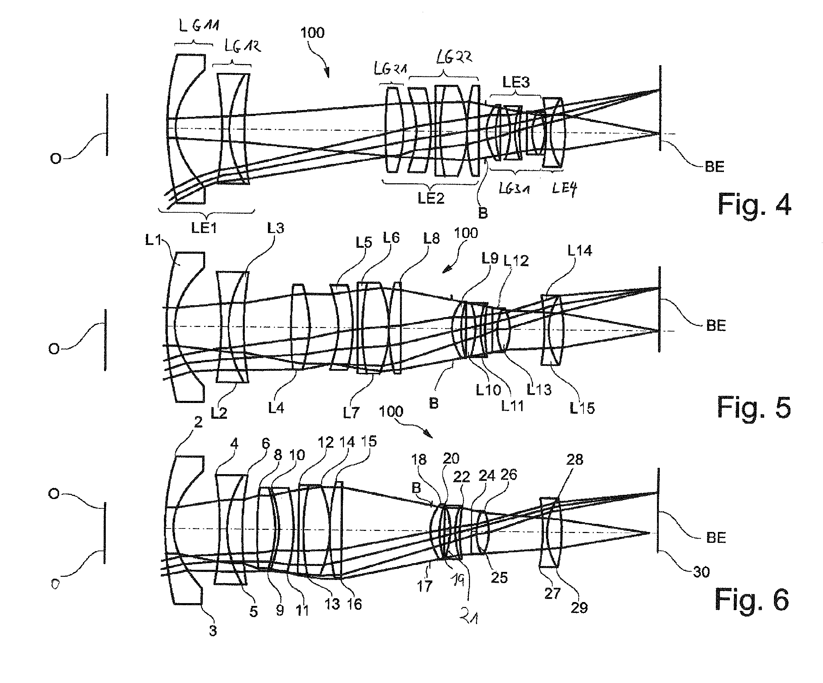

Die **Figuren 4** bis **6** zeigen Schnittdarstellungen eines weiteren Ausführungsbeispiels eines optischen Systems in Form eines Objektivs 100. **Figur 4** ist eine Schnittdarstellung des Objektivs 100 in einer ersten Brennweiteneinstellung, nämlich einer Weitwinkelstellung. **Figur 6** ist eine Schnittdarstellung des Objektivs 100 in einer dritten Brennweiteneinstellung, nämlich einer Teleeinstellung. **Figur 5** zeigt eine Schnittdarstellung des Objektivs 100 in einer zweiten (mittleren) Brennweiteneinstellung, weiche zwischen der ersten Brennweiteneinstellung und der dritten Brennweiteneinstellung liegt.

Das Objektiv 100 dient der Abbildung eines Objekts O (nur schematisch dargestellt) auf eine Bilderfassungseinheit **BE.** Es weist eine erste Linseneinheit LE1, eine zweite Linseneinheit LE2, eine dritte Linseneinheit LE3 und eine vierte Linseneinheit LE4 auf. Die vorgenannten Linseneinheiten LE1 bis LE4 sind vom Objekt O in Richtung der Bilderfassungseinheit BE in der folgenden Reihenfolge im Objektiv 100 angeordnet: erste Linseneinheit LE1 - zweite Linseneinheit LE2-dritte Linseneinheit LE3 - vierte Linseneinheit LE4. Hinsichtlich der Definition des Begriffs Linseneinheit wird auf weiter oben verwiesen.

Die erste Linseneinheit LE1 weist eine erste Linse L1, eine zweite Linse L2 und eine dritte Linse L3 auf. Die erste Linse L1 bildet eine vierte Linsengruppe LG11, welche negative Brechkraft aufweist. Ferner bilden die zweite Linse L2 und die dritte Linse L3 eine fünfte Linsengruppe LG12, welche ebenfalls negative Brechkraft aufweist.

Die zweite Linseneinheit LE2 ist ebenfalls aus mehreren Linsen zusammengesetzt, nämlich aus einer vierten Linse L4, einer fünften Linse L5, einer sechsten Linse L6, einer siebten Linse L7 und einer achten Linse L8. Die vierte Linse L4 bildet eine erste Linsengruppe LG21, die positive Brechkraft aufweist. Hingegen bilden die Linsen L5 bis L8 eine zweite Linsengruppe LG22, die ebenfalls positive Brechkraft aufweist.

Die dritte Linseneinheit LE3 ist ebenfalls aus mehreren Linsen gebildet, nämlich aus einer neunten Linse L9, einer zehnten Linse L10, einer elften Linse L11, einer zwölften Linse L12 und einer dreizehnten Linse L13. Die Linsen L9 bis L13 bilden eine dritte Linsengruppe LG31, die negative Brechkraft aufweist.

Die vierte Linseneinheit LE4 umfasst eine vierzehnte Linse L14 und eine fünfzehnte Linse L15. Die vierte Linseneinheit LE4 weist positive Brechkraft auf.

Jede der vorgenannten Linsen L1 bis L15 weist eine zum Objekt O gerichtete erste Fläche und eine zur Bilderfassungseinheit BE gerichtete zweite Fläche auf. Diese sind in der **Figur 6** gekennzeichnet.

So weist die erste Linse L1 eine zum Objekt O gerichtete Fläche 2 und eine zur Bilderfassungseinheit BE gerichtete Fläche 3 auf. Die zweite Linse L2 ist mit einer zum Objekt O gerichteten Fläche 4 und mit einer zur Bilderfassungseinheit BE gerichteten Fläche 5 versehen. Die dritte Linse L3 weist ebenfalls die (nun zum Objekt O gerichtete) Fläche 5 und eine zur Bilderfassungseinheit BE gerichtete Fläche 6 auf. Die vierte Linse L4 ist mit einer zum Objekt O gerichteten Fläche 8 und mit einer zur Bilderfassungseinheit BE gerichteten Fläche 9 versehen. Die fünfte Linse L5 weist eine zum Objekt O gerichtete Fläche 10 und eine zur Bilderfassungseinheit BE gerichtete Fläche 11 auf. Die sechste Linse L6 weist ebenfalls eine zum Objekt O gerichtete Fläche 12 und eine zur Bilderfassungseinheit BE gerichtete Fläche 13 auf. Die siebte Linse L7 weist ebenfalls die (nun zum Objekt O gerichtete) Fläche 13 und eine zur Bilderfassungseinheit BE gerichtete Fläche 14 auf. Hingegen weist die achte Linse L8 eine zum Objekt O gerichtete Fläche 15 und eine zur Bilderfassungseinheit BE gerichtete Fläche 16 auf.

Die neunte Linse L9 weist eine zum Objekt O gerichtete Fläche 18 und eine zur Bilderfassungseinheit BE gerichtete Fläche 19 auf. Die zehnte Linse L10 hingegen weist eine zum Objekt O gerichtete Fläche 20 und eine zur Bilderfassungseinheit BE gerichtete Fläche 21 auf. Die elfte Linse L11 weist wiederum die zum Objekt O gerichtete Fläche 21 und eine zur Bilderfassungseinheit BE gerichtete Fläche 22 auf. Die zwölfte Linse L12 weist eine zum Objekt O gerichtete Fläche 24 auf und ist ferner mit einer zur Bilderfassungseinheit BE gerichteten Fläche 25 versehen. Die dreizehnte Linse L13 weist ebenfalls die (nun zum Objekt O gerichtete) Fläche 25 und eine zur Bilderfassungseinheit BE gerichtete Fläche 26 auf. Die vierzehnte Linse L14 wiederum weist eine zum Objekt O gerichtete Fläche 27 und eine zur Bilderfassungseinheit BE gerichtete Fläche 28 auf. Die fünfzehnte Linse L15 weist ebenfalls die (nun zum Objekt O gerichtete) Fläche 28 und eine zur Bilderfassungseinheit BE gerichtete Fläche 29 auf.

Nachfolgend werden in einer Tabelle Eigenschaften der einzelnen Linsenflächen angegeben.

**Tabelle 3:**

| Fläche | Radius [mm] | Dicke [mm] | Glas |
|--------|-------------|------------|------|
| 0 | Unendlich | 0,000000 | |
| 1 | Unendlich | 1,000000 | |
| 2 (A) | 193,432769 | 4,000119 | SBAL35 |
| 3 | 37,994704 | 22,277583 | |
| 4 | -185,453058 | 3,500000 | SBSM25 |
| 5 | 51,507538 | 7,540737 | NLASF46A |
| 6 | 148,323543 | 3,029450 | |
| 7 | 758,678817 | 65,487802 | |
| 8 | 167,785290 | 9,059492 | SFPL51 |
| 9 | -76,152545 | 6,923106 | |
| 10 | -45,756005 | 6,499237 | NKZFS5 |
| 11 | -95,586309 | 2,054568 | |
| 12 | 539,788967 | 2,499248 | NKZFS5 |
| 13 | 77,673974 | 13,251587 | NBK10 |
| 14 | -55,984453 | 0,244664 | |
| 15 | 75,226559 | 5,621770 | SFPL51 |
| 16 | -756,010331 | 3,999919 | |
| 17 | Blende | 0,000000 | |
| 18 (A) | 23,182484 | 4,229823 | SNBH5 |
| 19 | 40,000002 | 2,240014 | |
| 20 | 189,333206 | 4,646475 | STIH1 |

(fortgesetzt)

| Fläche | Radius [mm] | Dicke [mm] | Glas |
|--------|-------------|------------|--------|
| 21 | -39,882226 | 2,498069 | SLAH64 |
| 22 | 32,719558 | 3,912052 | |
| 23 | Unendlich | 1,666025 | |
| 24 | 122,396793 | 2,498325 | SLAH79 |
| 25 | 21,606192 | 5,977393 | SFPL51 |
| 26 | -48,744175 | 1,236753 | |
| 27 | -73,640279 | 2,488203 | NKZFS11 |
| 28 | 47,177670 | 6,836341 | SLAH58 |
| 29 | -67,817999 | 47,724742 | |
| 30 | Unendlich | | |

Aus der vorstehenden Tabelle gehen die einzelnen Flächen der einzelnen Linsen L1 bis L15 hervor. Ferner sind die Radien der einzelnen Flächen angegeben. Darüber hinaus ist der Abstand des Scheitelpunkts einer Fläche zu dem Scheitelpunkt der nächsten Fläche angegeben. Dies gibt auch die Dicke der einzelnen Linsen L1 bis L15 wieder. Ferner ist die Glassorte der jeweiligen Einheiten angegeben, wobei die Notation der Glassorten sich auf Glassorten des Unternehmens Schott und Ohara bezieht.

Die Flächen 1, 7 und 23 sind in den **Figuren 4 bis 6** nicht dargestellt. Es handelt sich um Hilfsflächen, die zur Berechnung der in der Tabelle 3 enthaltenen Daten verwendet wurden. Die Flächen 1, 7 und 23 sind körperlich nicht im Objektiv 100 realisiert.

Mit der Fläche 17 ist eine Blende B bezeichnet (vgl. **Figur 4).** Die Blende B ist auch (als Besonderheit der Zoomobjektive dieser Erfindung) mit einer beweglichen negativen Linsengruppe mechanisch gekoppelt. Auch bei diesem Ausführungsbeispiel wirkt sich diese Kopplung vorteilhaft auf die Durchmesser der einzelnen Einheiten aus und führt somit zu kleinen Durchmessern der einzelnen Einheiten.

Mit der Fläche 0 ist in der Tabelle 3 das Objekt O bezeichnet. Die Fläche 30 bezeichnet die Fläche der Bilderfassungseinheit BE.

Flächen einzelner Linsen sind asphärisch ausgebildet. Diese Flächen sind mit einem "A" gekennzeichnet, wobei sich die asphärische Ausbildung nach der bereits oben genannten Gleichung mit den dazugehörigen Asphärenkoeffizienten ergibt:

Für die Fläche 2 gelten die folgenden Koeffizienten:

$k = 0,000000$
$A_4 = 6,53811706187772E-07$
$A_6 = -9,70551495647818E-13$
$A_8 = 4,18641337730801 E-14$
$A_{10} = -5,19122723064601 E-17$
$A_{12} = 2,11358531075844E-20$

Für die Fläche 18 gelten die folgenden Koeffizienten:

$k = 0,000000$
$A_4 = 8,33215813833185E-07$
$A_6 = 2,81846789604375E-09$
$A_8 = 1,67286959756972E-11$
$A_{10} = -5,57532626418691 E-14$
$A_{12} = 2,71874072113721E-16$

In der nachfolgenden Tabelle sind die Brennweiten, die F-Zahl sowie der Abstand der angegebenen Flächen zur nächsten Fläche der in den Figuren 4 bis 6 dargestellten Brennweiteneinstellungen angegeben.

**Tabelle 4:**

| Einstellung | f [mm] | F-Zahl | Abstand 7 [mm] | Abstand 9 [mm] | Abstand 16 [mm] | Abstand 26 [mm] |
|---|---|---|---|---|---|---|
| Fig. 4 | 28,800 | 2,88 | 65,488 | 6,923 | 4,000 | 1,237 |
| Fig. 5 | 54,499 | 3,00 | 19,579 | 15,196 | 25,463 | 17,410 |
| Fig. 6 | 77,600 | 2,88 | 4,455 | 2,476 | 43,794 | 26,922 |

Sowohl für das Ausführungsbeispiel nach den **Figuren 1 bis 3** als auch für das Ausführungsbeispiel nach den **Figuren 4 bis 6** gilt nun auch das Nachstehende.

Die erste Linseneinheit LE1 weist eine vierte Linsengruppe LG11 und eine fünfte Linsengruppe LG12 auf. Vom Objekt O in Richtung der Bilderfassungseinheit BE sind zunächst die vierte Linsengruppe LG11 und dann die fünfte Linsengruppe LG12 angeordnet. Die fünfte Linsengruppe LG12 hat negative Brechkraft und wird zum Fokussieren des Objektivs 100 auf das Objekt O bewegt.

Die zweite Linseneinheit LE2 besteht aus mindestens einer Linsengruppe mit positiver Brechkraft, die für eine Veränderung der Brennweite des Objektivs 100 bewegt wird. Bei dem Ausführungsbeispiel gemäß den **Figuren 1 bis 3** besteht die zweite Linseneinheit LE2 aus einer Linsengruppe LG21, die aus den vier Linsen L5 bis L8 gebildet ist. Hingegen weist bei dem Ausführungsbeispiel gemäß den **Figuren 4 bis 6** die zweite Linseneinheit LE2 die beiden, für eine Veränderung der Brennweite beweglichen Linsengruppen LG21 und LG22 (erste Linsengruppe LG21 und zweite Linsengruppe LG22) auf, welche beide positive Brechkraft aufweisen.

Beide Ausführungsbeispiele weisen jeweils die dritte Linsengruppe (LG31 bzw. LG32) in der dritten Linseneinheit LE3 auf. Diese wird ebenfalls während des Zoomvorganges (Veränderung der Brennweite) bewegt.

Für die Einstellung der Brennweite des Objektivs 100 werden die beweglichen Linsengruppen der zweiten Linseneinheit LE2 und der dritten Linseneinheit LE3 entlang der optischen Achse des Objektivs 100 bewegt.

Durch die Bewegung der Linsengruppen innerhalb dieser beiden Linseneinheiten LE2 und LE3 wird die Brennweite kontinuierlich und stetig verändert. Die erste Linseneinheit LE1 und die vierte Linseneinheit LE4 werden für die Veränderung der Brennweite des Objektivs 100 nicht bewegt.

Die zweite Linseneinheit LE2 weist einen (zweiten) Abbildungsmaßstab $\beta_2$ auf. Ferner weist die dritte Linseneinheit LE3 einen (dritten) Abbildungsmaßstab $\beta_3$ auf. Zum Einstellen der ersten Brennweite **(Figur 1, Figur 4)** werden die Linsengruppen der zweiten Linseneinheit LE2 und der dritten Linseneinheit LE3 in die in der **Figur 1** bzw. **Figur 4** dargestellten Positionen gebracht. Für die Einstellung der zweiten Brennweite **(Figur 2, Figur 5)** werden die Linsengruppen der zweiten Linseneinheit LE2 und der dritten Linseneinheit LE3 in die in der Figur 2 bzw. **Figur 5** dargestellten Positionen gebracht. Zur Einstellung der dritten Brennweite **(Figur 3, Figur 6)** werden die Linsengruppen der zweiten Linseneinheit LE2 und der dritten Linseneinheit LE3 in die in der **Figur 3** bzw. **Figur 6** dargestellten Positionen gebracht. Das Objektiv 100 erfüllt folgende Relation:

$$|\beta_{2W}\,\beta_{3W}| < |\beta_{2M}\,\beta_{3M}| < |\beta_{2T}\,\beta_{3T}| \quad \text{[Relation 1]}$$

wobei

$\beta_{2W}$ der Abbildungsmaßstab der zweiten Linseneinheit LE2 in der ersten Brennweiteneinstellung ist,

$\beta_{3W}$ der Abbildungsmaßstab der dritten Linseneinheit LE3 in der ersten Brennweiteneinstellung ist,

$\beta_{2M}$ der Abbildungsmaßstab der zweiten Linseneinheit LE2 in der zweiten Brennweiteneinstellung ist,

$\beta_{3M}$ der Abbildungsmaßstab der dritten Linseneinheit LE3 in der zweiten Brennweiteneinstellung ist,

$\beta_{2T}$ der Abbildungsmaßstab der zweiten Linseneinheit LE2 in der dritten Brennweiteneinstellung ist, und

$\beta_{3T}$ der Abbildungsmaßstab der dritten Linseneinheit LE3 in der dritten Brennweiteneinstellung ist.

Bei dem ersten Ausführungsbeispiel gemäß den **Figuren 1 bis 3** ändert sich der Betrag des Produktes des Abbildungsmaßstabs der zweiten Linseneinheit LE2 und des Abbildungsmaßstabs der dritten Linseneinheit LE3 in einem Bereich von 1,41 bis 4,21 stetig, wobei die angegeben Bereichsgrenzen zum Bereich gehören. Es wird aber explizit darauf hingewiesen, dass die Erfindung nicht auf den vorgenannten Bereich eingeschränkt ist. Vielmehr ist jeder Bereich verwendbar, der für die Erfindung geeignet ist.

Bei dem zweiten Ausführungsbeispiel gemäß den **Figuren 4 bis 6** ändert sich der Betrag des Produktes des Abbildungsmaßstabs der zweiten Linseneinheit LE2 und des Abbildungsmaßstabs der dritten Linseneinheit LE3 von 0,98 bis 2,64. Es ist beispielsweise aber auch vorgesehen, dass bei dem Objektiv 100 der Betrag des Produktes des Abbildungsmaßstabs der zweiten Linseneinheit LE2 und des Abbildungsmaßstabes der dritten Linseneinheit LE3 im Bereich von 0,9 bis 5 liegt. Die vorgenannten Bereichsgrenzen gehören zu den beanspruchten Bereichen. Es wird aber explizit darauf hingewiesen, dass die Erfindung nicht auf die vorgenannten Bereiche eingeschränkt ist. Vielmehr ist jeder Bereich verwendbar, der für die Erfindung geeignet ist.

Bei einer Variation des Ausführungsbeispiels der **Figuren 4 bis 6** ist es vorgesehen, dass die Brennweite der zweiten Linseneinheit LE2 60,77 mm beträgt. Hingegen beträgt die Brennweite der dritten Linseneinheit LE3 -114,89 mm. Der Abbildungsmaßstab der zweiten Linseneinheit LE2 liegt im Bereich von -0,57 bis - 1,36. Der Abbildungsmaßstab der dritten Linseneinheit LE3 liegt im Bereich von 1,72 bis 1,94.

Bei beiden Ausführungsbeispielen kann der Abbildungsmaßstab der zweiten Linseneinheit LE2 zwischen -0,5 und -2 und der Abbildungsmaßstab der dritten Linseneinheit LE3 zwischen 1,5 und 3 liegen.

Bei einer Veränderung der Brennweite des Objektivs 100 wird die Blende B zusammen mit der Linsengruppe LG31 mit negativer Brechkraft innerhalb der dritten Linseneinheit LE3 bewegt. Mit anderen Worten ausgedrückt ist für eine Veränderung der Brennweite des Objektivs 100 die Blende B zusammen mit der Linsengruppe mit negativer Brechkraft innerhalb der dritten Linseneinheit LE3 beweglich ausgebildet. Ferner weist die Blende B eine Blendenöffnung auf. Die Blendenöffnung der Blende B ist bei einer Veränderung der Brennweite des Objektivs 100 einstellbar. Insbesondere ist es vorgesehen, dass eine Ausdehnung der Blendenöffnung im Bereich von 20 mm bis 35 mm liegt.

Die erste Linseneinheit LE1 weist in beiden Ausführungsbeispielen eine Linse mit positiver Brechkraft auf, wobei diese Linse sowohl als alleinstehende Linse wie im Ausführungsbeispiel gemäß den Figuren 1 bis 3 als auch als Linse innerhalb eines Kittgliedes wie im Ausführungsbeispiel gemäß den Figuren 4 bis 6 ausgebildet werden kann.

Die hier diskutierten Ausführungsbeispiele weisen alle Vorteile auf, die bereits weiter oben diskutiert wurden. Auf diese Ausführungen wird explizit verwiesen.

**Bezugszeichenliste**

| 100 | Objektiv |
|---|---|

| O | Objekt |
|---|---|
| BE | Bilderfassungseinheit |
| B | Blende |

| LE1 | erste Linseneinheit |
|---|---|
| LE2 | zweite Linseneinheit |
| LE3 | dritte Linseneinheit |
| LE4 | vierte Linseneinheit |
| OA | optische Achse |

| LG11 | vierte Linsengruppe (innerhalb) der ersten Linseneinheit |
|---|---|
| LG12 | fünfte Linsengruppe (innerhalb) der ersten Linseneinheit |

| LG21 | erste Linsengruppe (innerhalb) der zweiten Linseneinheit |
|---|---|
| LG22 | zweite Linsengruppe (innerhalb) der zweiten Linseneinheit |

| LG31 | zweite bzw. dritte Linsengruppe (innerhalb) der dritten Linseneinheit |
|---|---|
| LG32 | dritte Linsengruppe innerhalb der dritten Linseneinheit |

L1 bis L21    Linsen

0 bis 42    Flächen

**Patentansprüche**

1.  Optisches System (100) zur Abbildung eines Objekts (O) auf eine Bilderfassungseinheit (BE), wobei

    - das optische System (100) eine veränderbare Brennweite aufweist,
    - das optische System (100) von einem Objekt (O) in Richtung einer Bilderfassungseinheit (BE) gesehen mindestens eine erste Linseneinheit (LE1), mindestens eine zweite Linseneinheit (LE2), mindestens eine dritte Linseneinheit (LE3) und mindestens eine vierte Linseneinheit (LE4) aufweist,
    - zu einer Veränderung der Brennweite des optischen Systems (100) mindestens eine erste Linse in der zweiten Linseneinheit (LE2) und mindestens eine zweite Linse in der dritten Linseneinheit (LE3) beweglich ausgebildet sind, und wobei

- bei einer Veränderung der Brennweite des optischen Systems (100) die erste Linseneinheit (LE1) und die vierte Linseneinheit (LE4) unbeweglich ausgebildet sind,

**dadurch gekennzeichnet, dass**

- die zweite Linseneinheit (LE2) und die dritte Linseneinheit (LE3) insgesamt mindestens drei Linsengruppen (LG21, LG31, LG32; LG21, LG22, LG31) aufweisen, nämlich eine erste Linsengruppe (LG21), eine zweite Linsengruppe (LG31; LG22) und eine dritte Linsengruppe (LG32; LG31), wobei von der ersten Linseneinheit (LE1) in Richtung einer Bilderfassungseinheit (BE) zunächst die erste Linsengruppe (LG21), dann die zweite Linsengruppe (LG31; LG22) und dann die dritte Linsengruppe (LG32; LG31) angeordnet sind,
- die erste Linsengruppe (LG21), die zweite Linsengruppe (LG31; LG22) und die dritte Linsengruppe (LG32; LG31) zur Veränderung der Brennweite des optischen Systems (100) beweglich ausgebildet sind, und dass
- mindestens eine der ersten Linsengruppe (LG21), der zweiten Linsengruppe (LG31; LG22) und der dritten Linsengruppe (LG32; LG31) positive Brechkraft aufweist und mindestens eine der ersten Linsengruppe (LG21), der zweiten Linsengruppe (LG31; LG22) und der dritten Linsengruppe (LG32; LG31) negative Brechkraft aufweist.

2. Optisches System (100) nach Anspruch 1, **dadurch gekennzeichnet, dass** die zweite Linseneinheit (LE2) einen Abbildungsmaßstab aufweist, der während der Veränderung der Brennweite zwischen -0,4 und -2 veränderbar ist.

3. Optisches System (100) nach Anspruch 1 oder 2, **dadurch gekennzeichnet, dass** die dritte Linseneinheit (LE3) einen positiven Abbildungsmaßstab aufweist, der während der Veränderung der Brennweite zwischen 1,5 und 3 veränderbar ist.

4. Optisches System (100) nach einem der vorangehenden Ansprüche, **dadurch gekennzeichnet, dass**

- die zweite Linseneinheit (LE2) die erste Linsengruppe (LG21) und die zweite Linsengruppe (LG22) aufweist, und dass
- die erste Linsengruppe (LG21) und die zweite Linsengruppe (LG22) positive Brechkraft aufweisen.

5. Optisches System (100) nach einem der vorangehenden Ansprüche, **dadurch gekennzeichnet, dass** die dritte Linseneinheit (LE3) die dritte Linsengruppe (LG32; LG31) aufweist.

6. Optisches System (100) nach einem der vorangehenden Ansprüche, **dadurch gekennzeichnet, dass**

- die erste Linsengruppe (LG21) einen Abbildungsmaßstab aufweist,
- die zweite Linsengruppe (LG31; LG22) einen Abbildungsmaßstab aufweist, und dass
- der Abbildungsmaßstab der ersten Linsengruppe (LG21) und der Abbildungsmaßstab der zweiten Linsengruppe (LG31; LG22) während der Veränderung der Brennweite zum gleichen Zeitpunkt das Vorzeichen wechseln.

7. Optisches System (100) nach einem der vorangehenden Ansprüche, **dadurch gekennzeichnet, dass**

- die erste Linseneinheit (LE1) mindestens zwei Linsengruppen umfasst, nämlich eine vierte Linsengruppe (LG11) und eine fünfte Linsengruppe (LG12),
- von einem Objekt (O) in Richtung einer Bilderfassungseinheit (BE) zunächst die vierte Linsengruppe (LG11) und dann die fünfte Linsengruppe (LG12) angeordnet sind,
- die vierte Linsengruppe (LG11) negative Brechkraft aufweist,
- die fünfte Linsengruppe (LG12) negative Brechkraft aufweist,
- bei einer Veränderung der Brennweite des optischen Systems (100) die fünfte Linsengruppe (LG12) unbeweglich ausgebildet ist, und dass
- zu einer Fokussierung des optischen Systems (100) die fünfte Linsengruppe (LG12) beweglich ausgebildet ist.

8. Optisches System (100) nach Anspruch 2 und 3, **dadurch gekennzeichnet, dass** sowohl der Betrag des Abbildungsmaßstabs der zweiten Linseneinheit (LE2) und als auch der Betrag des Abbildungsmaßstabs der dritten Linseneinheit (LE3) bei einer Veränderung der Brennweite des optischen Systems (100) von der ersten Brennweiteneinstellung in die zweite Brennweiteneinstellung stetig ansteigt.

9.  Optisches System (100) nach mindestens einem der Ansprüche 2, 3 oder 8, **dadurch gekennzeichnet, dass** das Produkt des Abbildungsmaßstabs der zweiten Linseneinheit (LE2) und des Abbildungsmaßstabs der dritten Linseneinheit (LE3) betragsmäßig im Bereich von 0,9 bis 5,0 liegt.

10. Optisches System (100) nach mindestens einem der Ansprüche 2, 3, 8 oder 9, **dadurch gekennzeichnet, dass** das optische System (100) die folgende Bedingung erfüllt:

$$|\beta_{2W}\,\beta_{3W}| < |\beta_{2M}\,\beta_{3M}| < |\beta_{2T}\,\beta_{3T}|$$

wobei

$\beta_{2W}$ der Abbildungsmaßstab der zweiten Linseneinheit (LE2) in einer ersten Brennweiteneinstellung ist,
$\beta_{3W}$ der Abbildungsmaßstab der dritten Linseneinheit (LE3) in der ersten Brennweiteneinstellung ist,
$\beta_{2M}$ der Abbildungsmaßstab der zweiten Linseneinheit (LE2) in einer zweiten Brennweiteneinstellung ist,
$\beta_{3M}$ der Abbildungsmaßstab der dritten Linseneinheit (LE3) in der zweiten Brennweiteneinstellung ist,
$\beta_{2T}$ der Abbildungsmaßstab der zweiten Linseneinheit (LE2) in einer dritten Brennweiteneinstellung ist, und
$\beta_{3T}$ der Abbildungsmaßstab der dritten Linseneinheit (LE3) in der dritten Brennweiteneinstellung ist.

11. Optisches System (100) nach einem der vorangehenden Ansprüche, **dadurch gekennzeichnet, dass**

- an oder in der dritten Linseneinheit (LE3) eine Blende (B) angeordnet ist, und dass
- für eine Veränderung der Brennweite des optischen Systems (100) die Blende (B) zusammen mit oder innerhalb der dritten Linseneinheit (LE3) beweglich ausgebildet ist.

12. Optisches System (100) nach einem der vorangehenden Ansprüche, **dadurch gekennzeichnet, dass** mindestens eines der folgenden Merkmale gegeben ist:

- die erste Linseneinheit (LE1) weist mindestens eine erste asphärische Fläche auf; oder
- die zweite Linseneinheit (LE2) weist mindestens eine zweite asphärische Fläche auf; oder
- die dritte Linseneinheit (LE3) weist mindestens eine dritte asphärische Fläche auf.

13. Optisches System (100) nach einem der vorangehenden Ansprüche, **dadurch gekennzeichnet, dass**

- die positive Brechkraft innerhalb der zweiten Linseneinheit (LE2) sich auf eine Brennweite bezieht, die im Bereich zwischen 40 mm und 70 mm liegt, und dass
- die negative Brechkraft innerhalb der dritten Linseneinheit (LE3) sich auf eine Brennweite bezieht, die im Bereich zwischen -40 mm und - 120 mm liegt.

14. Optisches System (100) nach einem der vorangehenden Ansprüche, **dadurch gekennzeichnet, dass** das optische System (100) ein Objektiv ist.

15. Aufnahmeeinheit zur Abbildung eines Objekts (O) mit mindestens einem optischen System (100) nach einem der vorangehenden Ansprüche sowie mit mindestens einer Bilderfassungseinheit (BE).

Fig. 1

Fig. 2

Fig. 3

EP 2 696 231 A1

Fig. 4

Fig. 5

Fig. 6

Europäisches
Patentamt

European
Patent Office

Office européen
des brevets

**EUROPÄISCHER RECHERCHENBERICHT**

Nummer der Anmeldung

EP 13 17 9938

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | JP H05 19169 A (OLYMPUS OPTICAL CO) 29. Januar 1993 (1993-01-29)<br><br>* Abbildungen 5, 33, 34 *<br>* Absatz [0041] *<br>----- | 1-3,5,6, 8-11, 13-15 | INV. G02B15/177 |
| X | EP 2 085 804 A1 (CANON KK [JP]) 5. August 2009 (2009-08-05) * Abbildung 1 *<br>----- | 1,4,5,12 | |
| X | EP 2 000 839 A1 (CANON KK [JP]) 10. Dezember 2008 (2008-12-10) * Abbildung 7 *<br>----- | 1,4,5,7, 12 | |
| X | US 2012/050602 A1 (IMAOKA TAKUYA [JP] ET AL) 1. März 2012 (2012-03-01) * Abbildung 17 *<br>----- | 1,4,5, 12,14,15 | |
| X | US 2003/165019 A1 (YAMAMOTO CHIKARA [JP]) 4. September 2003 (2003-09-04) * Abbildung 1 *<br>----- | 1,4,5,12 | RECHERCHIERTE SACHGEBIETE (IPC)<br><br>G02B |

Der vorliegende Recherchenbericht wurde für alle Patentansprüche erstellt

| Recherchenort | Abschlußdatum der Recherche | Prüfer |
|---|---|---|
| München | 21. Oktober 2013 | Serbin, Jesper |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

................................................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 17 9938

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-10-2013

| Im Recherchenbericht angeführtes Patentdokument | Datum der Veröffentlichung | Mitglied(er) der Patentfamilie | | Datum der Veröffentlichung |
|---|---|---|---|---|
| JP H0519169 A | 29-01-1993 | JP | 3226297 B2 | 05-11-2001 |
| | | JP | H0519169 A | 29-01-1993 |
| EP 2085804 A1 | 05-08-2009 | CN | 101504483 A | 12-08-2009 |
| | | CN | 102243364 A | 16-11-2011 |
| | | EP | 2085804 A1 | 05-08-2009 |
| | | EP | 2378335 A1 | 19-10-2011 |
| | | EP | 2378336 A1 | 19-10-2011 |
| | | JP | 5132343 B2 | 30-01-2013 |
| | | JP | 2009186569 A | 20-08-2009 |
| | | US | 2009195884 A1 | 06-08-2009 |
| | | US | 2011002044 A1 | 06-01-2011 |
| EP 2000839 A1 | 10-12-2008 | CN | 101320125 A | 10-12-2008 |
| | | EP | 2000839 A1 | 10-12-2008 |
| | | JP | 2008304765 A | 18-12-2008 |
| | | US | 2008304162 A1 | 11-12-2008 |
| US 2012050602 A1 | 01-03-2012 | JP | 2012047813 A | 08-03-2012 |
| | | US | 2012050602 A1 | 01-03-2012 |
| US 2003165019 A1 | 04-09-2003 | JP | 4060075 B2 | 12-03-2008 |
| | | JP | 2003195169 A | 09-07-2003 |
| | | US | 2003165019 A1 | 04-09-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5847875 A
- JP 08005921 A

- US 3682534 A